# EUROPEAN PATENT APPLICATION

(11) **EP 4 843 944 A1**
(43) Date of publication of application: **25.11.2026**
(21) Application number: 26179437.4
(22) Date of filing: 19.05.2026
(51) Int. Cl.: C01B 3/0015, C01B 3/22

(54) **PROCESS FOR STORING HYDROGEN**

(30) Priority: 19.05.2025 EP 25177382
(71) Applicant: Voyex B.V., 2629 JD Delft (NL)
(72) Inventor: Leenders, Wiard Sander, 2629 JD Delft (NL); De Visser, Marco Mattheus, 2629 JD Delft (NL); Negenman, Hidde Antonius, 2629 JD Delft (NL); Benschop, Fabian Leander, 2629 JD Delft (NL)
(74) Representative: De Vries & Metman

(57) **Abstract**

The invention pertains to a process for the reversible storage of hydrogen comprising a step of subjecting a hydrogen capture composition to a hydrogenation step in which the hydrogen capture composition is contacted with hydrogen under hydrogenation conditions in the presence of a hydrogenation catalyst, resulting in the formation of a hydrogenated hydrogen capture composition, wherein the hydrogen capture composition comprises 2-40 wt.% of 6-methylquinoline and 98-60 wt.% of 8-methylquinoline, the percentages being calculated on the total amount of methylquinoline in the hydrogen capture composition. Hydrogen can be recovered from the hydrogenated hydrogen capture composition obtained by this process by subjecting a hydrogenated hydrogen capture composition to a dehydrogenation step in which the hydrogenated hydrogen capture composition is contacted with a dehydrogenation catalyst under dehydrogenation conditions, resulting in the formation of hydrogen gas and dehydrogenated hydrogenated hydrogen capture composition.

A hydrogen capture composition which comprises 2-40 wt.% of 6-methylquinoline and 98-60 wt.% of 8-methylquinoline has been found to show good properties, in combination with attractive production costs and a decrease in aquatic toxicity as compared to the use of 8-methylquinoline alone.

## Description

The invention pertains to a process for storing hydrogen using a liquid hydrogen capture composition. The invention further pertains to a process for releasing hydrogen from a hydrogenated liquid hydrogen capture composition.

In the decarbonisation of the worldwide energy system, hydrogen has an important role, both as fuel and as industrial feedstock. To allow hydrogen to fulfil this role, it will be necessary to have efficient, reliable, and low-cost solutions for storage, transportation, and distribution of hydrogen.

In recent years, much attention has been paid to storing hydrogen by chemically or physically combining it with appropriate liquid or solid materials. One promising material for this purpose are the so-called LOHCs, which stands for liquid organic hydrogen carriers. A LOHC contains unsaturated double bonds, which can react with hydrogen in a hydrogenation step. The hydrogenated LOHC can be stored or transported, and when it is desired to release the hydrogen, the hydrogenated LOHC is subjected to a dehydrogenation step, resulting in gaseous hydrogen and the recovery of the LOHC. The recovered LOHC can then be re-used in a further hydrogenation step.

Yang et al (A review of hydrogen storage and transport technologies, Clean Energy, 2023, Vol. 7, No. 1, 190-216) has summarised the requirements for a suitable LOHC as follows:
- safe and non-toxic during transport and use
- sufficiently high storage capacity for hydrogen, per volume and per weight
- low melting point, e.g., less than -30°C
- relatively high boiling point, e.g., above 300°C
- sufficient chemical stability of the hydrogenated LOHC
- low energy consumption for the dehydrogenation reaction
- good selectivity of the hydrogenation and dehydrogenation reaction over a long lifecycle
- limited formation of side products in dehydrogenation
- ability of direct integration into current well-established fuel infrastructures
- low production cost.

As will be evident, it is a challenge to develop compounds which meet all of the above requirements. In particular, the combination of providing a LOHC with good properties at reasonable cost is an issue. Reference is made, for example, to Uijthof et al., Liquid Organic Hydrogen Carriers: process design and economic analysis for manufacturing N-ethylcarbazole, J. Adv. Manuf. Process. 2024;e10173. They indicate that N-ethylcarbazole, while being a promising LOHC candidate in view of its high hydrogen storage capacity, favourable thermodynamics of dehydrogenation, compatibility with existing infrastructure, and good safety characteristics, was considered not economically viable as carrier in commercial H₂ supply chains in view of its high manufacturing costs. An additional disadvantage of this compound is that it is not liquid at ambient temperature.

Alkyl-quinolines and alkyl-pyridines have been considered as potential LOHCs. Vervekin et al, Hydrogen storage: thermodynamic analysis of alkyl-quinolines and alkyl-pyridines as potential liquid organic hydrogen carriers (LOHC), Appl., Sci., 2021, 11, 11757, indicates that the comparative low enthalpies of reaction make these heteroaromatics a seminal LOHC system.

CN108440406 presents quinoline as a nitrogen heteroaromatic organic compound which is liquid at normal temperatures, has a boiling point of 238°C and a hydrogen storage capacity of 7.19 wt.%. The quinoline used in CN108440406 is 8-methylquinoline. This compound has a melting point of -80°C and attractive hydrogen storage capacity and further properties. However, its cost price prohibits its commercial use.

Accordingly, there is need in the art for a LOHC which combines good technical properties, in particular a low melting point, both in the hydrogenated and in the dehydrogenated state, a relatively high boiling point, sufficient hydrogen storage capacity, good selectivity properties, and good thermodynamic properties with low production costs and a good toxicity profile. The present invention solves this problem.

The invention pertains to a process for the reversible storage of hydrogen comprising a step of subjecting a hydrogen capture composition to a hydrogenation step in which the hydrogen capture composition is contacted with hydrogen under hydrogenation conditions in the presence of a hydrogenation catalyst, resulting in the formation of a hydrogenated hydrogen capture composition, wherein the hydrogen capture composition comprises 2-40 wt.% of 6-methylquinoline and 98-60 wt.% of 8-methylquinoline, the percentages being calculated on the total amount of methylquinoline in the hydrogen capture composition.

The invention also pertains to a process for recovering hydrogen from a hydrogenated hydrogen capture composition comprising a step of subjecting a hydrogenated hydrogen capture composition to a dehydrogenation step in which the hydrogenated hydrogen capture composition is contacted with a dehydrogenation catalyst under dehydrogenation conditions, resulting in the formation of hydrogen gas and the dehydrogenated product of the hydrogenated hydrogen capture composition, wherein the hydrogenated hydrogen capture composition is obtained by the hydrogenation process as above.

The invention further pertains to a process for storing hydrogen, comprising, sequentially,
- a step of subjecting a hydrogen capture composition to a hydrogenation step in which the hydrogen capture composition is contacted with hydrogen under hydrogenation conditions in the presence of a hydrogenation catalyst, resulting in the formation of a hydrogenated hydrogen capture composition, wherein the hydrogen capture composition comprises 2-40 wt.% of 6-methylquinoline and 98-60 wt.% of 8-methylquinoline, the percentages being calculated on the total amount of methylquinoline in the hydrogen capture composition,
- a step of storing the hydrogenated hydrogen capture composition thus formed, and
- a step of subjecting the hydrogenated hydrogen capture composition to a dehydrogenation step in which the hydrogenated hydrogen capture composition is contacted with a dehydrogenation catalyst under dehydrogenation conditions, resulting in the formation of hydrogen gas and dehydrogenated hydrogenated hydrogen capture composition.

Finally, the invention pertains to a hydrogen capture composition comprising 2-40 wt.% of 6-methylquinoline and 98-60 wt.% of 8-methylquinoline, the percentages being calculated on the total amount of methylquinoline in the hydrogen capture composition.

An aspect of the present invention resides in the use of a hydrogen capture composition which comprises 2-40 wt.% of 6-methylquinoline and 98-60 wt.% of 8-methylquinoline, the percentages being calculated on the total amount of methylquinoline in the hydrogen capture composition. As indicated above, while 8-methylquinoline shows good applicability as LOHC, its production costs render it unsuitable for commercial operation. In contrast, the hydrogen capture composition used in the present invention can easily be manufactured from a commercially available mixture of toluidine isomers without the necessity of further separation steps. This saves cost and ensures that the starting material is used to the fullest possible extent.

An additional advantage of the hydrogen capture composition used in the present invention is that the composition can be tailored to address variations in costs of raw materials. Further, it has been found that the use of a mixture results in a decrease in aquatic toxicity as compared to the use of 8-methylquinoline alone.

Additionally, the selection of this hydrogen capture composition ensures adequate solidification behaviour of the hydrogen capture composition at low temperatures, both for the hydrogenated hydrogen capture composition and for the hydrogen capture composition resulting from the dehydrogenating step. This may be explained as follows.

During use, a hydrogen capture composition will be subjected to repeated hydrogenation/dehydrogenation sequences. During hydrogenation, the methylquinolines are converted into decahydromethylquinolines, for which various stereoisomers exist. Some of these stereoisomers have a relatively high melting point. If these are present in an amount in which they will not dissolve in the hydrogen capture composition, solid product will be formed in the hydrogenated hydrogen capture composition. As the conversion of the dehydrogenation step may be below 100%, these same stereoisomers may also be present in the hydrogen capture composition as it is obtained from the dehydrogenation step, and may thus result in the formation of solid product in that material also. The presence of solid decahydromethylquinolines in a hydrogen capture composition has been found to result in solidification of the entire composition if it is stored under static conditions. This will lead to issues with product processing and removal. Also if the hydrogen capture composition is under dynamic conditions, e.g., under stirring or while being pumped from one unit to the other, the presence of solid material may lead to processing issues, e.g., in clogging of pumps or pipes. The unpredictability of the formation of solid material adds to the risks associated with its formation.

It has been found that the use of a hydrogen capture composition with a composition as presently presented helps to ensure that the formation of solid material in the hydrogenated hydrogen capture composition and the product obtained from dehydrogenating the hydrogen capture composition will be prevented at a temperature of below -20°C, sometimes even below -25°C, or even below -30°C,

Therewith, the present invention is directed to the use of a specific mixture of methylquinolines which meets the technical requirements specified above and combines them with good availability at adequate costs. This decreases the hurdle for commercial application of LOHC technology. Further advantages of the present invention and specific embodiments thereof will become apparent from the further specification.

The invention will be discussed in more detail below.

As indicated above, the invention makes use of a hydrogen capture composition which comprises 2-40 wt.% of 6-methylquinoline and 98-60 wt.% of 8-methylquinoline, the percentages being calculated on the total amount of methylquinoline in the hydrogen capture composition.

If the amount of 6-methylquinoline is above 40 wt.%, the risk of solids formation in the hydrogenated hydrogen capture composition or in the product of the dehydrogenation step may increase to an unacceptable level, especially at low temperatures. If the amount of 6-methylquinoline is below 2 wt.%, the advantages of the present invention with respect to accessibility of the starting material will not be obtained. It is preferred for the amount of 6-methylquinoline to make up at most 30 wt.% of the total amount of methylquinoline in the hydrogen capture composition, in particular at most 25 wt.%, more in particular at most 20 wt.%. Conversely, it is preferred for the amount of 6-methylquinoline to make up at least 5 wt.% of the total amount of methylquinoline in the hydrogen capture composition, in particular at least 10 wt.%.

The hydrogen capture composition may contain further methylquinolines than 6-methylquinoline and 8-methylquinoline. In general, the total amount of further methylquinolines will be less than 10 wt.%, in particular less than 5 wt.%, more in particular less than 2 wt.%, based on the total amount of methylquinolines in the hydrogen capture composition. Of the other methylquinolines than 6-methylquinoline and 8-methylquinoline, 7-methylquinoline may be the most prevalent. The amount of 7-methylquinoline generally is less than 8 wt.%, in particular less than 5 wt.%, more in particular less than 2 wt.%, based on the total amount of methylquinolines in the hydrogen capture composition. 5-methylquinoline may also be present. If so, it is generally present in an amount of less than 5 wt.%, in particular less than 2 wt.%, based on the total amount of methylquinolines in the hydrogen capture composition.

The amount of 8-methylquinoline is 98-60 wt.%, calculated on the total amount of methylquinoline in the hydrogen capture composition, in particular 98-70 wt.%.

The hydrogen capture composition may contain other compounds than methylquinolines. The presence of such further compounds is not excluded, as long as they do not adversely interfere with the melting and crystallisation behaviour of the hydrogen capture composition.

Examples of further compounds which may be present include solvents. Suitable solvents are those compounds in which the compounds to be dissolved have a good solubility and stability and which can easily be removed, e.g., through evaporation. It is within the scope of the skilled person to select a suitable solvent. Methylcyclohexane may be mentioned as an example. If a solvent is present, it may be present in one or more of the hydrogenation step and the dehydrogenation step. It may also be present during the storage of the product of the hydrogenation step or the product of the dehydrogenation step. If so desired, solvent may be added or removed at any step in the process.

However, as the methylquinolines are responsible for the hydrogen capture capabilities of the hydrogen capture composition, it is preferred if the hydrogen capture composition consists for at least 60 wt.% of methylquinolines, in particular at least 70 wt.%, more in particular at least 80 wt.%, still more in particular at least 90 wt.%, even more in particular at least 95 wt.%, calculated on the total weight of the hydrogen capture composition, and still more preferably for at least 98 wt.%. It should be noted that in this definition fully and partially hydrogenated methylquinolines are calculated as methylquinolines, and not as other components.

In the context of the present specification, a composition is indicated as a hydrogen capture composition if it is to be subjected to a hydrogenation step. The product from the hydrogenation step is a hydrogenated hydrogen capture composition. If the hydrogenated hydrogen capture composition is subjection to a dehydrogenation step, the resulting product will again be indicated as a hydrogen capture composition. As the dehydrogenation step may not be at full conversion this means that the hydrogen capture composition obtained from a hydrogenation-dehydrogenation sequence may have a different composition than the original "fresh" hydrogen capture composition. In other words, the composition as it will be submitted to the hydrogenation step may have some hydrogenated compounds. The compositional requirements with respect to the relative amount of the 6-methyl compound and 8-methyl compound apply the hydrogen capture composition irrespective of its hydrogenation status.

In the process according to the invention, the hydrogen capture composition is subjected to a hydrogenation step in which the hydrogen capture composition is contacted with hydrogen under hydrogenation conditions in the presence of a hydrogenation catalyst.

Suitable hydrogenation catalysts are known in the art. They generally are heterogeneous catalysts comprising one or more metals of group 3-12 of the periodic table of elements, if so desired on an inorganic carrier, more in particular heterogeneous catalysts comprising one or more metals of Group 3, 6, 7, 8, 9, 10, or 11 on an inorganic carrier.

In one embodiment, the catalyst comprises one or more metals selected from the group of manganese, yttrium, chromium, molybdenum, tungsten, iron, ruthenium, rhodium, cobalt, nickel, palladium and platinum. It may be preferred to use one or more metals selected from the group of ruthenium, rhodium, nickel, palladium and platinum. The amount of metal depends on the type of metal or metals that are applied. As a general rule, the total amount will reside between 0.1 and 70 wt.%, calculated on the weight of the catalyst. For noble metals such as platinum and palladium the amount generally ranges between 0.1 and 5 wt.%, in particular between 0.1 and 2 wt.%. For other metals the amount generally ranges between 2 and 70 wt.%, heavily dependent on the type of metal and the nature of the catalyst.

The inorganic carrier generally comprises one or more metal oxides such as oxides of alumina, silica, titania, or zirconia, or combinations thereof, such as silica-alumina. Carbon may also be used. The use of alumina is considered preferred.

In one embodiment, the catalyst is in the form of a particulate material. Depending on the reactor and process configuration the catalyst may, e.g., be in the form of a powder, or in the form of shaped particles. Shaped particles generally have an effective diameter of 0.1-10 mm, wherein the effective diameter is the diameter of a spherical particle with the same volume as the particle at issue.

Hydrogenation conditions are conditions under which hydrogenation takes place within a reasonable time frame or space velocity. Hydrogenation conditions generally include a temperature in the range of 50-250°C and a hydrogen partial pressure of 5-180 bar. To obtain a balance between reaction rate, conversion, and selectivity it is preferred for the temperature to be in the range of 80-180°C. The hydrogen partial pressure preferably is in a range of 10-50 bar, in particular in the range of 20-40 bar.

The hydrogenation step takes place under the provision of hydrogen as reactant. The hydrogen is provided in the form of hydrogen gas. Other gases may be present, as long as they do not adversely interfere with the hydrogenation reaction. However, as there is no additional benefit to the presence of such further gases while they do take up reaction volume it is preferred for the presence of further gases to be avoided. Accordingly, it is preferred for gaseous medium present during the reaction to contain less than 20 vol.% of other gases than hydrogen, in particular less than 10 vol.%, more in particular less than 5 vol.%, still more in particular less than 2 vol.%. Other gases which may be present include inert gases such as argon or nitrogen.

Where the process is a batch process the hydrogenation step is generally carried out for a period of 1 minute to 24 hours. The reaction time is governed by the hydrogenation conditions, reactor configuration, and desired conversion. It may be preferred for the hydrogenation reaction to be carried out for a period of 15 minutes to 8 hours. Where the process is a continuous process, the liquid hourly space velocity generally is in the range of 0.01-10 hr⁻¹. The reaction time or space velocity is governed by the hydrogenation conditions, reactor configuration, and desired conversion.

The hydrogenation reaction may be carried out in any reactor configuration, as long as intimate contact between the hydrogen capture composition and the hydrogen is ensured. Suitable configurations include fixed bed, moving bed, ebulliated bed, and stirred reactors. The reaction may be carried out in batch or continuous.

The aim of the hydrogenation step is to capture as much hydrogen as possible. It is therefore preferred to carry out the hydrogenation step under such conditions that a degree of conversion of at least 70% is obtained, preferably at least 75%, more preferably at least 80% 80% is obtained, in particular at least 90%, more in particular at least 95%, or even at least 98%, calculated on the theoretical maximum conversion when all methylquinoline in the hydrogen capture composition is fully hydrogenated to decahydromethylquinoline (10H-methylquinoline).

The hydrogenated hydrogen capture composition obtained in the hydrogenation step can be processed as desired. It will generally be stored for future dehydrogenation. It may also be transported during storage to another site where it will be dehydrogenated. In fact, the concept of using a LOHC has been developed to allow transport of hydrogen to other locations in a safe and effective manner.

The hydrogenated hydrogen capture composition is stored or transported in the liquid phase, with the formation of solids being avoided. This is important because presence of solids may interfere with the further processing of the hydrogenated hydrogen capture composition. It is a feature of the hydrogen capture composition used in the present invention that solids formation at low temperatures does not take place. This applies both to the hydrogenated hydrogen capture composition and to the hydrogen capture composition itself. Accordingly, the hydrogenated hydrogen capture composition may be stored at temperatures as low as - 30°C as lower limit. Nevertheless, it may be preferred for the temperature of the hydrogen capture composition during storage to be at least -25°C, or at least -20°C, or at least -15°C. As a maximum temperature, the flash point of the hydrogenated hydrogen capture composition is often applied. Therefore, the hydrogenated hydrogen capture composition is generally stored at a temperature of at most 75°C, in particular at most 70°C. The broad temperature range for the storage of the hydrogen capture composition makes it possible to safely store and transport the hydrogenated hydrogen capture composition under a wide variety of ambient temperatures without excessive temperature control being required.

The hydrogenated hydrogen capture composition will be subjected to a dehydrogenation step, to release hydrogen gas and converting the hydrogenated hydrogen capture composition back into hydrogen capture composition. The dehydrogenation step is carried out by contacting the hydrogenated hydrogen capture composition with a dehydrogenation catalyst under dehydrogenation conditions.

Suitable dehydrogenation catalysts are known in the art. They generally are heterogeneous catalysts comprising one or more metals of group 3-12 of the periodic table of elements, if so desired on an inorganic carrier, more in particular heterogeneous catalysts comprising one or more metals of Group 3, 6, 7, 8, 9, 10, or 11 on an inorganic carrier.

In one embodiment, the catalyst comprises one or more metals selected from the group of manganese, yttrium, chromium, molybdenum, tungsten, iron, ruthenium, rhodium, cobalt, nickel, palladium and platinum. It may be preferred to use one or more metals selected from the group of ruthenium, rhodium, nickel, palladium and platinum. The amount of metal depends on the type of metal or metals that are applied. As a general rule, the total amount will reside between 0.1 and 70 wt.%, calculated on the weight of the catalyst. For noble metals such as platinum and palladium the amount generally ranges between 0.1 and 5 wt.%, in particular between 0.1 and 2 wt.%. For other metals the amount generally ranges between 2 and 70 wt.%, heavily dependant on the type of metal and the nature of the catalyst.

The inorganic carrier generally comprises one or more metal oxides such as oxides of alumina, silica, titania, or zirconia, or combinations thereof, such as silica-alumina. Carbon may also be used. The use of alumina is considered preferred. In one embodiment, the catalyst is in the form of a particulate material. Depending on the reactor and process configuration the catalyst may, e.g., be in the form of a powder, or in the form of shaped particles. Shaped particles generally have an effective diameter of 0.1-10 mm, wherein the effective diameter is the diameter of a spherical particle with the same volume as the particle.

Dehydrogenation conditions are conditions under which dehydrogenation takes place within a reasonable time frame or space velocity. Dehydrogenation conditions generally include a temperature in the range of 50-300°C and a pressure in the range of 0.1-30 bar. To obtain a balance between reaction rate, conversion, and selectivity it is preferred for the temperature to be in the range of 160-250°C, in particular 180-230 °C. The pressure is preferably in the range of 1-15 bar.

The pressure may depend on the hydrogen pressure prevailing in the step to which the hydrogen will be provided, e.g., in the range of 5-15 bar.

In commercial operation, if the dehydrogenation step is a batch process, it is generally carried out for a period of 1 minute to 24 hours. It may be preferred for the dehydrogenation reaction to be carried out for a period of 30 minutes to 8 hours. Where the process is a continuous process, the liquid hourly space velocity generally is in the range of 0.01-10 hr-1. The reaction time or space velocity is governed by the dehydrogenation conditions, reactor configuration, and desired conversion.

The dehydrogenation reaction may be carried out in any reaction configuration, as long as adequate release of hydrogen is ensured. Suitable configurations include fixed bed, moving bed, ebulliated bed, and stirred reactors. The reaction may be carried out in batch or continuous.

The hydrogen released in the dehydrogenation step will generally be separated from the liquid product formed. The hydrogen can be transferred, e.g., to a storage vessel or a combustion engine, with or without an intermediate compression step, depending on the initial pressure and the desired pressure at the output location.

The aim of the dehydrogenation step is to release as much hydrogen as possible from the hydrogenated hydrogen capture composition. It is therefore preferred to carry out the dehydrogenation step under such conditions that a degree of conversion of at least 80% is obtained, in particular at least 90%, more in particular at least 95%, calculated on the theoretical maximum conversion when all decahydromethylquinoline (10H-methylquinoline) is dehydrogenated to methylquinoline.

Accordingly, the product of the dehydrogenation reaction preferably has a hydrogen loading of at most 20% of the theoretically possible hydrogen loading, which would be obtained when all methylquinoline in the hydrogen capture composition would be fully hydrogenated to decahydromethylquinoline (10H-methylquinoline). It is preferred for the hydrogen capture composition obtained from the dehydrogenation reaction to have a hydrogen loading of at most 10%, in particular at most 5%.

It has been found that some of the hydrogenated methylquinoline stereoisomers are fairly resistant to dehydrogenation while their presence will influence the formation of solid product in the hydrogen capture composition in hydrogenated and dehydrogenated form. It is a feature of the claimed invention that the composition of the hydrogen capture composition is such that the presence of remnants of hydrogenated methylquinolines will not interfere to an unacceptable extent with the solidification behaviour of the hydrogen capture composition, either in hydrogenated or in dehydrogenated form.

The hydrogen capture composition obtained from the dehydrogenation reaction can be processed as desired. It will generally be stored for future hydrogenation. It may also be transported during storage to another site where it will be re-hydrogenated.

The hydrogen capture composition obtained from the dehydrogenation reaction is stored or transported in the liquid phase, with the formation of solids being avoided. This is important because presence of solids may interfere with the further processing of the hydrogen capture composition. As indicated above, it is a feature of the hydrogen capture composition used in the present invention that solids formation at low temperatures does not take place to an unacceptable extent. This applies to the hydrogenated hydrogen capture composition, to the fresh hydrogen capture composition, and to the hydrogen capture composition as obtained from the dehydrogenation step. Accordingly, the hydrogen capture composition may be stored at temperatures as low as -30°C as lower limit. Nevertheless, it may be preferred for the temperature of the hydrogen capture composition during storage to be at least -25°C, or at least -20°C, or at least -15°C. As a maximum temperature, the flash point of the hydrogen capture composition is often applied. Therefore, the hydrogen capture composition is generally stored at a temperature of at most 75°C, in particular at most 70°C. The broad temperature range for the storage of the hydrogen capture composition makes it possible to safely store and transport the hydrogen capture composition under a wide variety of ambient temperatures without excessive temperature control being required.

The present invention also pertains to a process for storing hydrogen, comprising, sequentially,
- a step of subjecting a hydrogen capture composition to a hydrogenation step,
- a step of storing the hydrogenated hydrogen capture composition thus formed, and
- a step of subjecting the hydrogenated hydrogen capture composition to a dehydrogenation step.

The hydrogenation step, storing step, and dehydrogenation step can be carried out as above. Preferences expressed above for the individual steps also apply here.

The invention further pertains to a hydrogen capture composition comprises 2-40 wt.% of 6-methylquinoline and 98-60 wt.% of 8-methylquinoline, the percentages being calculated on the total amount of methylquinoline in the hydrogen capture composition. The preferences for the composition discussed above in the context of the process also apply here.

The hydrogen capture composition according to the invention, which comprises 2-40 wt.% of 6-methylquinoline and 98-60 wt.% of 8-methylquinoline, can be manufactured by combining the individual components. It has appeared, however, that the composition can be efficiently prepared from a mixture of o-toluidine and p-toluidine. It will be clear that the use of p-toluidine affords 6-methylquinoline and the use of o-toluidine affords 8-methylquinoline. Accordingly, the present invention also pertains to a process for manufacturing a composition comprising 2-40 wt.% of 6-methylquinoline and 98-60 wt.% of 8-methylquinoline, suitable for use in hydrogen storage in accordance with the present invention, which comprises the steps of
- providing a first mixture comprising toluidine, an oxidant, and a solvent, wherein the toluidine comprises 2-40 wt.% of p-toluidine and 98-60 wt.% of o-toluidine (based on the total weight of toluidine); and
- adding acrolein or a precursor thereof to the first mixture, thereby forming a reaction mixture comprising the methylquinoline compound, wherein the temperature of the reaction mixture is from 100 to 200°C.

The ratio between 6-methylquinoline and 8-methylquinoline is governed by the ratio of p-toluidine and o-toluidine in the feed. As indicated above, the toluidine comprises 2-40 wt.% of p-toluidine, in particular 2-30 wt.% and 98-60 wt.% of o-toluidine, in particular 98-70 wt.% (based on the total weight of toluidine). The toluidine may comprise at most 95 wt.% of o-toluidine (based on the total weight of toluidine), in particular at most 85 wt.%. Conversely, the toluidine may comprise at least 75 wt.% of o-toluidine (based on the total weight of toluidine), in particular at least 80 wt.%.

The toluidine may comprise at may comprise less than 10 wt.% of m-toluidine (based on the total weight of the toluidine), in particular less than 5 wt.% of m-toluidine, more in particular less than 2 wt.%.

In one embodiment, the solvent comprises sulphuric acid, as is, e.g, the case in the well-known Skraup reaction. In another embodiment, the solvent, e.g., comprises one or more compounds selected from the group of C(1-6)alkylsulfonic acid and C(6)arylsulfonic acid optionally substituted with methyl.

The C(1-6)alkylsulfonic acid may be a straight-chain C(1-6)alkylsulfonic acid. The C(1-6)alkylsulfonic acid may be methanesulfonic acid, ethanesulfonic acid, n-propanesulfonic acid, n-butanesulfonic acid, n-pentanesulfonic acid, and n-hexanesulfonic acid. The C(1-6)alkylsulfonic acid is preferably methanesulfonic acid. The C(6)arylsulfonic acid may be benzenesulfonic acid or a toluenesulfonic acid, in particular para-toluenesulfonic acid.

Accordingly, the solvent preferably comprises C(1-6)alkylsulfonic acid, benzenesulfonic acid, or (para-)toluenesulfonic acid. More particularly, the solvent comprises methanesulfonic acid.

The molar ratio of the toluidine compound to the solvent generally is in the range of 1:1 to 1:20.

The first mixture further comprises an oxidant. As used herein, the term "oxidant" refers to a substance in a redox reaction that accepts electrons from a reductant. Suitable oxidants include, for example, an Fe(II) or an Fe(lll) salt of a C(1-6)alkylsulfonic acid (in particular, an Fe(II) or an Fe (III) salt of methanesulfonic acid) or a hydrate thereof, an Fe(II) or an Fe(III) salt of a C(6)arylsulfonic acid optionally substituted with methyl or a hydrate thereof, Fe2(SO4)3 or a hydrate thereof, FeSO4 or a hydrate thereof, FeCl3 or a hydrate thereof, an Al(III) salt of a C(1-6)alkylsulfonic acid (in particular, an Al(III) salt of methanesulfonic acid) or a hydrate thereof, an Al(III) salt of a C(6)arylsulfonic acid or a hydrate thereof, Al2(SO4)3 or a hydrate thereof, AlCl3 or a hydrate thereof, a Cu(II) salt of a C(1-6)alkylsulfonic acid (in particular, a Cu(II) salt of methanesulfonic acid) or a hydrate thereof, a Cu(ll) salt of a C(1-6)alkylsulfonic acid or a hydrate thereof, CuSO4 or a hydrate thereof, CuCl2 or a hydrate thereof, and nitrotoluene, in particular, p-nitrotoluene or o-nitrotoluene. Oxygen, e.g. as present in air, is also a suitable oxidant. Combinations of various oxidants may also be used.

The molar ratio of the toluidine compound to the total amount of oxidant in the first mixture generally is in the range of 1.0:0.01 to 1.0:2.0, in particular from 1.0:0.1 to 1.0:1.5, more in particular 1.0:0.2 to 1.0:1.0, more in particular from 1.0:0.3 to 1:0.9.

In the process of the invention acrolein or a precursor thereof is added to the first mixture. Suitable precursors of acrolein include glycerol and diethyl acetal. Further compounds, e.g., solvents may be present, but this is generally not required. The use of glycerol is considered preferred. It is preferred to add the acrolein or a precursor thereof to the first mixture in a gradual manner, e.g., over a period of from 1 to 12 hours, in particular 1 to 5 hours.

The acrolein or precursor thereof may be used in excess with respect to the amount of toluidine.

As will be evident to the skilled person, different embodiments of the present invention can be combined unless they are mutually exclusive. Preferences expressed for the composition of the hydrogen capture composition apply to the hydrogenated hydrogen capture composition in an analogous manner. Preferences expressed in the context of the process also apply to the composition, and vice versa.

All percentages used herein are weight percentages, unless specified otherwise.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

For ranges for which only an upper limit is defined, e.g., the amount of other methylquinolines than 6-methylquinoline and 8-methylquinoline, it will be evident to the skilled person that the lower limit is 0 wt.%. For ranges for which only a lower limit is defined, e.g., the amount of methylquinolines in the hydrogen capture composition, it will be evident to the skilled person that the upper limit is 100 wt.%.

The following examples will illustrate the practice of the present invention in some of the preferred embodiments. Other embodiments within the scope of the claims will be apparent to one skilled in the art.

### Example 1: Hydrogenation of hydrogen capture composition

A hydrogen capture composition as used in the present invention was hydrogenated by contacting it with hydrogen under hydrogenation conditions. The composition of the hydrogen capture composition was as follows: a mixture of 90 mol% methylcyclohexane, 8.5 mol% 8-methylquinoline, and 1.5 mol% 6-methylquinoline, resulting in 15 wt.% 6-methylquinoline on the total amount of methylquinolines. The hydrogen capture composition was contacted in a stirred reaction vessel with a noble metal on alumina hydrogenation catalyst (powder, 12 wt% based on hydrogen capture composition). The reaction took place at a temperature of 100-130 °C. The reaction was carried out in a bath process, in which the reactor was initially filled with 40 barg H2. As the hydrogenation reactions proceeded, the pressure decreased. Every 30 minutes the reactor was opened, a product sample was taken and additional hydrogen was provided, bringing the pressure back to 40 barg H2. The reaction was carried out for two hours, and product formation was monitored using gas chromatography (Agilent, HP 6890 Series) with an auto injector (Agilent 7683), FID detector and an HP-5ms UI column (length: 15 m, diameter: 0.250 mm, film thickness: 0.25 µm). The setting parameters were as follows: injection temperature: 280 °C; injection volume: 1.0 µL; column temperature: 50 °C,1 min; 50-280 °C, 10 °C/min; 280°C, 1min; and the detector temperature: 300 °C. The split ratio was 149:1. The carrier gas was nitrogen, and the flow rate was 1.3 mL/min.

It appeared that 100% hydrogenation was reached within 90 minutes and no side products were formed. 100% hydrogenation means that all methylquinolines in the system were converted into 10H-methylquinolines.

This example shows that the combination of 6-methylquinoline and 8-methylquinoline as used in the present invention can be fully hydrogenated with relative ease. The hydrogen capture composition as used here contains a substantial amount of solvent. This is necessitated by the experimental setup, and not required for the hydrogenation reaction.

### Example 2: Dehydrogenation of hydrogenated hydrogen capture composition

The hydrogenated hydrogen capture composition obtained in Example 1 was dehydrogenated by contacting it with a dehydrogenation catalyst under dehydrogenation conditions. Between the hydrogenation step and the dehydrogenation step the methylcyclohexane solvent was removed by evaporation.

In the dehydrogenation reaction, 4.1g of noble metal on alumina catalyst was weighed into a reaction vessel, which was purged with nitrogen at 200°C for 2 hours to remove air and moisture. The vessel was cooled down to room temperature and a cooler was attached. 10.2 g of the hydrogenated hydrogen capture composition as obtained in Example 1 was added. The vessel was placed in an oil bath under stirring. The dehydrogenation reaction started immediately. Samples were taken during the reaction by taking a small aliquot and analysing using the GC-FID as described in Example 1.

The results are presented in the following table

| time (h) | yield H₂% |
|---|---|
| 0 | 0% |
| 2 | 25% |
| 50 | 82% |
| 70 | 95% |

Thus, after two hours 25% of the theoretical hydrogen yield was already achieved. After 70 hours 95% of the theoretical hydrogen yield was achieved. The remaining hydrogenated products were partially hydrogenated 6-methylquinoline and 8-methylquinoline which can be re-hydrogenated in a reaction with hydrogen.

In this example a reaction time of 70 hours was used. This is not representative for operation on a commercial scale, where it will be possible to use shorter reaction times, int. al., as a result of selecting an appropriate reactor configuration.

### Example 3: Investigation into melting behaviour of compositions comprising varying amounts of high melting point hydrogenated 6-methylquinoline

It had been found that the hydrogenation of 6-methylquinoline is sometimes associated with the formation of product which is solid at room temperature. This product was isolated and used to investigate the solidification behaviour of 6-methylquinoline and 8-methylquinoline and the hydrogenated products thereof.

The experiments were carried out as follows: varying amounts of the solid 10H-6M isomer isolated as above were added to samples of 1 gram of, respectively, 6-methylquinoline, 8-methylquinoline, 10H-6-methylquinoline obtained by hydrogenating 6-methylquinoline using a noble metal on alumina catalyst, and10H-8-methylquinoline obtained by hydrogenating 8-methylquinoline using a noble metal on alumina catalyst. The samples were stored either at 5-6°C in a refrigerator or -22 to -23°C in a freezer for at least 24 hours, until the sample did not change further. Storage took place under static conditions. The results are provided in the tables below.

### Refrigerator experiments at 5/6°C

| **Amount of solid isomer added (gram)** | **0H-6MQ** | **0H-8MQ** | **10H-6MQ** | **10H-8MQ** |
|---|---|---|---|---|
| 0 | liquid | liquid | liquid | liquid |
| 0.05 | liquid | liquid | liquid | liquid |
| 0.10 | liquid | liquid | liquid | liquid |
| 0.15 | liquid | liquid | solid | liquid |
| 0.25 | solid | solid | solid | liquid |

### Freezer experiments at -22/-23°C

| **Amount of solid isomer added (gram)** | **0H-6MQ** | **0H-8MQ** | **10H-6MQ** | **10H-8MQ** |
|---|---|---|---|---|
| 0 | liquid | liquid | solid* | liquid |
| 0.05 | liquid | liquid | solid | liquid |
| 0.10 | solid | liquid | solid | liquid |
| 0.15 | solid | solid | solid | solid |
| 0.25 | solid | solid | solid | solid |

| | | | | |
|---|---|---|---|---|
| * this sample was solid at a temperature of -22°C to -23°, but melted quickly upon removal from the freezer. | | | | |

The samples indicated as solid in the tables were fully solidified. Upon agitation they converted into "slush-puppy" type mixtures in which solid components were present in a liquid medium.

The results of these experiments show that the presence of material amounts of the high-melting point isomer of 10H-6MQ will result in solidification of the feed at low temperatures. This applies to both the hydrogenated and the non-hydrogenated feeds. The amount of the high-melting point isomer of 10H-6MQ will depend on the conditions under which 6-methylquinoline is hydrogenated. The composition of the present invention ensures that the hydrogen capture composition used in the hydrogenation and dehydrogenation steps in accordance with the present invention is liquid even at low temperatures.

## Claims

1. Process for the reversible storage of hydrogen comprising a step of subjecting a hydrogen capture composition to a hydrogenation step in which the hydrogen capture composition is contacted with hydrogen under hydrogenation conditions in the presence of a hydrogenation catalyst, resulting in the formation of a hydrogenated hydrogen capture composition, wherein the hydrogen capture composition comprises 2-40 wt.% of 6-methylquinoline and 98-60 wt.% of 8-methylquinoline, the percentages being calculated on the total amount of methylquinoline in the hydrogen capture composition.

2. Process according to claim 1, wherein 6-methyl quinoline makes up at most 30 wt.% of the total amount of methylquinoline in the hydrogen capture composition, in particular at most 25 wt.%, more in particular at most 20 wt.%, and/or at least 5 wt.% of the total amount of methylquinoline in the hydrogen capture composition, in particular at least 10 wt.%.

3. Process according to any one of the preceding claims wherein the total amount of other methylquinolines than 6-methylquinoline and 8-methylquinoline is less than 10 wt.%, in particular less than 5 wt.%, more in particular less than 2 wt.%, based on the total amount of methylquinolines in the hydrogen capture composition.

4. Process according to any one of the preceding claims, wherein the hydrogen capture composition consists for at least 60 wt.% of methylquinolines, in particular at least 70 wt.%, more in particular at least 80 wt.%, still more in particular at least 90 wt.%, even more in particular at least 95 wt.%, and still more preferably for at least 98 wt.%, calculated on the total weight of the hydrogen capture composition.

5. Process according to any one of the preceding claims, wherein the hydrogenation conditions include a temperature in the range of 50-250°C and a hydrogen partial pressure of 5-180 bar, in particular a temperature in the range of 80-180°C, and a hydrogen partial pressure in a range of 10-50 bar, in particular in the range of 20-40 bar.

6. Process according to any one of the preceding claims, wherein the hydrogenation step is carried out under such conditions that a degree of conversion of at least 80% is obtained, in particular at least 90%, more in particular at least 95%.

7. Process for recovering hydrogen from a hydrogenated hydrogen capture composition comprising a step of subjecting a hydrogenated hydrogen capture composition to a dehydrogenation step in which the hydrogenated hydrogen capture composition is contacted with a dehydrogenation catalyst under dehydrogenation conditions, resulting in the formation of hydrogen gas and dehydrogenated hydrogenated hydrogen capture composition, wherein the hydrogenated hydrogen capture composition is obtained by the process of any one of claims 1-6.

8. Process according to claim 7, wherein the dehydrogenation conditions include a temperature in the range of 50-300°C and a pressure in the range of 0.1-30 bar, preferably a temperature in the range of 160-250°C, in particular 180-230 °C and a pressure in the range of 1-15 bar.

9. Process according to any one of claims 7-8, wherein the step of bringing a hydrogenated hydrogen capture composition under dehydrogenation conditions resulting in the formation of hydrogen gas and dehydrogenated hydrogenated hydrogen capture composition is carried out under such conditions that a degree of conversion of at least 70%, preferably at least 75%, more preferably at least 80% is obtained, in particular at least 90%, more in particular at least 95%, calculated on the theoretical maximum conversion when all decahydromethylquinoline (10H-methylquinoline) is dehydrogenated to methylquinoline.

10. Process for storing hydrogen, comprising, sequentially,
• a step of subjecting a hydrogen capture composition to a hydrogenation step in which the hydrogen capture composition is contacted with hydrogen under hydrogenation conditions in the presence of a hydrogenation catalyst, resulting in the formation of a hydrogenated hydrogen capture composition, wherein the hydrogen capture composition comprises 2-40 wt.% of 6-methylquinoline and 98-60 wt.% of 8-methylquinoline, the percentages being calculated on the total amount of methylquinoline in the hydrogen capture composition,
• a step of storing the hydrogenated hydrogen capture composition thus formed, and
• a step of subjecting the hydrogenated hydrogen capture composition to a dehydrogenation step in which the hydrogenated hydrogen capture composition is contacted with a dehydrogenation catalyst under dehydrogenation conditions, resulting in the formation of hydrogen gas and dehydrogenated hydrogenated hydrogen capture composition.

11. Process according to claim 10, wherein the step of contacting a hydrogen capture composition with hydrogen under hydrogenation conditions, resulting in the formation of a hydrogenated hydrogen capture composition is carried out in accordance with any one of claims 2 to 6, and/or wherein the step of bringing the hydrogenated hydrogen capture composition under dehydrogenation conditions, resulting in the formation of hydrogen gas and dehydrogenated hydrogenated hydrogen capture composition is carried out in accordance with any one of claims 7-9.

12. Process according to claim 10 or 11 wherein the step of storing the hydrogenated hydrogen capture composition is carried out at a temperature in the range of -20°C to 75°C and/or, wherein during storage the hydrogenated hydrogen capture composition is transferred from a first location to a second location.

13. Process according to any one of claims 10 to 12, wherein the dehydrogenated hydrogenated hydrogen capture composition is recycled to the hydrogenation step, and optionally is stored before being recycled to the hydrogenation step, and optionally is transferred during storage from a first location to a second location, wherein storage and optional transport is preferably carried out at a temperature in the range of -20°C to 75°C.

14. Hydrogen capture composition comprises 2-40 wt.% of 6-methylquinoline and 98-60 wt.% of 8-methylquinoline, the percentages being calculated on the total amount of methylquinoline in the hydrogen capture composition.

15. Process for manufacturing a composition comprising 2-40 wt.% of 6-methylquinoline and 98-60 wt.% of 8-methylquinoline, suitable as a hydrogen capture composition in accordance with any one of claims 1-14, which comprises the steps of
• providing a first mixture comprising toluidine, an oxidant, and a solvent, wherein the toluidine comprises 2-40 wt.% of p-toluidine and 98-60 wt.% of o-toluidine (based on the total weight of toluidine); and
• adding acrolein or a precursor thereof to the first mixture, thereby forming a reaction mixture comprising the methylquinoline compound, wherein the temperature of the reaction mixture is from 100 to 200°C.
